# EUROPÄISCHE PATENTSCHRIFT

(11) **EP 1 524 277 B1**
(45) Veröffentlichungstag und Bekanntmachung des Hinweises auf die Patenterteilung: **17.12.2008**
(21) Anmeldenummer: 04023551.7
(22) Anmeldetag: 02.10.2004
(51) Int. Cl.: C08C 2/02, C08C 2/04, C08L 15/00

(54) **Verfahren zur Herstellung von gereinigten Elastomeren aus Lösung**
Process for forming purified elastomers from solution
Procédé de préparation d'élastomères purifiées à partir d'une solution

(30) Priorität: 14.10.2003 DE 10347704
(43) Veröffentlichungstag der Anmeldung: 20.04.2005
(73) Patentinhaber: LANXESS Deutschland GmbH, 51369 Leverkusen (DE)
(72) Erfinder: Achten, Dirk, Dr., 50823 Köln (DE); Warsitz, Rafael, 45136 Essen (DE); Dudziak, Gregor, Dr., 53177 Bonn (DE); Mersmann, Franz-Josef, 51467 Bergisch Gladbach (DE); Pask, Stephen, Dr., 41542 Dormagen (DE); Szentivanyi, Zsolt, Dr., 51373 Leverkusen (DE)

(56) Entgegenhaltungen:
- EP-A- 1 097 948
- US-A- 4 271 055
- US-A- 4 294 704

## Beschreibung

Die Erfindung betrifft ein Verfahren zur Herstellung von gereinigten durch Emulsionspolymerisation hergestellten Elastomeren, deren Fremdstoffanteil um bis zu 99 Gew.-% reduziert ist, bezogen auf das ungereinigte Elastomer.

Es besteht ein großer Bedarf an einem Verfahren, das es ermöglicht Elastomere herzustellen, deren Anteil an Fremdstoffen so gering ist bzw. kontrolliert beeinflussbar ist, dass diese Fremdstoffe nachfolgende Reaktionen nicht mehr beeinflussen und eine Verwendung der Elastomere im medizinischen und Nahrungsmittelkontakt-Bereich ermöglicht.

Elastomere finden eine breite Anwendung in vielen gummitechnologischen Erzeugnissen wie Gummischläuchen, Antriebsriemen, Dichtungen, Membranen, Gewebebedeckungen, Schuhsohlen, Profilen, Folien, Verpackungsmaterialien und vielen anderen Produkten. Für Anwendungen im Spritzgussartikelbereich, Anwendungen mit Lebensmittelkontakt, im medizinischen Bereich, in der Elektronikindustrie sowie als Ausgangsprodukte für weitere Reaktionen wie Hydrierungen in Gegenwart empfindlicher Übergangsmetallkatalysatoren müssen die Elastomere aufwendig von den Fremdstoffen aus dem Herstellprozess des Elastomers, einer radikalischen Polymerisation in wässriger Emulsion, befreit werden. Der Einsatz von Elastomeren, mit einem zu großen Fremdstoffanteil ist daher im medizinischen Umfeld und bei Lebensmittelkontakt aus toxikologischen Gründen oft stark eingeschränkt, wobei die Grenze des Fremdstoffanteils sowohl von der Art des Fremdstoffes als auch von seiner Konzentration abhängig ist. Bevorzugt sind jedoch Fremdstoffanteile, die geringer sind als 2 Gew.-%. Der Einsatz von Elastomeren mit einem zu großen Fremdstoffanteil in elektronischen Anwendungen ist oft nur bedingt möglich. Dies gilt vor allen Dingen dann, wenn die Fremdstoffe Wasser und/oder Ionen enthalten, da diese das Korrosionsverhalten und Leitfähigkeitsverhalten der elektronischen Erzeugnisse stark beeinflussen können und durch thermischen Einfluss nicht immer rückstandsfrei entfernt werden können. Elastomere mit einem Fremdstoffanteil größer 4 Gew.-%, bezogen auf das gereinigte Elastomer, können für Reaktionen, wie Metathesen und/oder Hydrierungen bei denen in Gegenwart empfindlicher Übergangsmetallkatalysatoren gearbeitet werden muss, häufig nicht eingesetzt werden, da die Fremdstoffe die Reaktionskontrolle erschweren, Umsatzzeiten verlängern und die Übergangsmetallkatalysatoreffektivität herabsetzen. Des Weiteren können die Fremdstoffe im Falle der Hydrierung maßgeblich zur Korrosion und damit zum Verschleiß der zur Hydrierung benötigten Anlagen beitragen. Der Einsatz von Elastomeren mit einem zu großen Fremdstoffanteil (größer als 3 Gew.-%) kann in vielen Anwendungen wie bei Spritzgussartikeln oder Extrusionsartikel zu verminderter Oberflächenqualität der Artikel wie Formverschmutzung oder Ausblühungen fuhren. Oftmals ist auch die Rückgewinnung der im Elastomer verbliebenen Fremdstoffe wirtschaftlich von Interesse. Dies tritt besonders dann auf, wenn teure Katalysatoren eingesetzt worden sind, die nach einer Aufarbeitung der Katalyse wieder zurückgeführt werden können.

Die Reinigung der Elastomere von Fremdstoffen für die oben genannten Anwendungen geschieht typischerweise durch aufwendige Neutralisations-, Koagulations-, Fäll- und Waschprozesse in geeigneten organischen Substanzen wie Alkoholen, Ketonen, Ethern, Wasser und Mischungen derselben (Ullmann's Encyclopedia of Industrial Chemistry, Sixth Edition, 2000 Electronic Release) mit denen aber eine vollständige Reinigung grundsätzlich nicht gewährleistet werden kann. Besonders problematisch ist die Abtrennung von niedermolekularen, zum Teil hochsiedenden (>150°C), schlecht- wasserlöslichen und/oder wasserunlöslichen Fremdstoffen wie Emulgatoren, Fettsäuren, Fettsäuresalzen und Fettsäureestern, Monomeren und deren Derivaten wie Dimeren, Oligomeren, ungewünschte Reaktionsprodukte mit Startern und Reglern, Regler/Derivaten, organische Katalysatorreste und Liganden, die bei Elastomeren, die durch Emulsionspolymerisation hergestellt wurden, und durch herkömmliche Reinigungsprozesse in der Elastomerphase verbleiben. Durch die im Stand der Technik bekannten Aufarbeitungs- und Reinigungsverfahren können diese Fremdstoffe oft nicht ausreichend und wenn nur mit erheblichem wirtschaftlichen Aufwand abgetrennt werden, da sie während der Latexkoagulation vom Elastomer umschlossen werden und so den Waschvorgängen nicht zugänglich sind. Eine fraktionierte Fällung der Elastomeren aus Lösung zur Abtrennung von niedermolekularen und/oder in organischen Lösungsmitteln(Fällmittel) in denen das Polymere unlöslich ist, wie zum Beispiels Methanol als Lösungsmittel im Fall von Nitrilbutadienkautschuk und Polychloroprenkautschuk, löslichen Fremdstoffen wie z.B. Emulgatoren, Fettsäuren, Fettsäureester, Fettsäuresalze von Na/K/Ca, Monomere, Regler, Katalysatorbestandteile, Reaktionsprodukte derselben, und anschließende Trocknung ist bekannt, aber großtechnisch mit hohen Kosten verbunden. Zudem ist sie wegen der benötigten großen Mengen an Lösungs- und Fällmitteln ökologisch nachteilig.

Die Aufgabe der vorliegenden Erfmdung ist es daher ein Verfahren bereit zu stellen, das es ermöglicht den Fremdstoffanteil von Elastomeren gegenüber den ungereinigten Elastomeren um bis zu 99 Gew.-% zu senken.

Diese Aufgabe wird gelöst durch ein Verfahren zur Herstellung von gereinigten Elastomeren, die durch Emulsionspolymerisation hergestellt werden und deren Anteil an Fremdstoffen um bis zu 99Gew.-% reduziert ist, bezogen auf das ungereinigte Elastomer, umfassend die Schritte
a) Ultrafiltrieren eines in einem organischen Lösemittel gelösten, ungereinigten durch Emulsionspolymerisation hergestellten Elastomers und getrenntes Auffangen des Permeats, das die Fremdstoffe enthält, vom Retentat, dass das gereinigte Elastomer enthält und
b) Einstellung der Strömungsgeschwindigkeit des Retentats auf einen Wert größer 1 m/sec. während der Ultrafiltration.

Vorteilhaft ist das erfindungsgemäße Verfahren, wenn das ungereinigte Elastomer Nitril-Butadien-Kautschuk ist, das durch Emulsionspolymerisation hergestellt wird, in einen Festkautschuk überführt wird und anschließend in einem organischen Lösemittel gelöst wird.

Vorteilhaft ist das erfindungsgemäße Verfahren mit ungereinigtem, hydriertem Nitril-Butadien-Kautschuk als Elastomer, welches durch Hydrierung von Nitril-Butadien-Kautschuk, das einen Fremdstoffanteil im Bereich von 1 bis 10 Gew.-% besitzt, in Gegenwart eines Übergangsmetallkatalysators hergestellt wird, wobei der Übergangsmetallkatalysator aus dem Permeat der Ultrafiltration zurückgewonnen wird und nach Aufarbeitung in der Hydrierung wieder eingesetzt wird.

Vorteilhaft ist das erfmdungsgemäße Verfahren, wenn ein bereits nach dem erfindungsgemäßen Verfahren hergestellter, gereinigter Nitril-Butadien-Kautschuk in Gegenwart eines Übergangsmetallkatalysators zum ungereinigten, hydrierten Nitril-Butadien-Kautschuk hydriert wird,
a) die erhaltene ungereinigte, hydrierte Lösung ultrafiltriert wird, das Permeat, das den Übergangsmetallkatalysator enthält, vom Retentat, das den gereinigten, hydrierten Nitril-Butadien-Kautschuk enthält, getrennt aufgefangen wird und
b) Einstellung der Strömungsgeschwindigkeit des Retentats auf einen Wert größer 1 m/sec. während der Ultrafiltration, wobei der Übergangsmetallkatalysator aus dem Permeat der Ultrafiltration zurückgewonnen wird und nach Aufarbeitung in die Hydrierung wieder eingesetzt wird.

Vorteilhaft wird in dem erfindungsgemäßen Verfahren die Ultrafiltration kontinuierlich betrieben.

Vorteilhaft ist das erfindungsgemäße Verfahren, wenn die Ultrafiltration bei Temperaturen im Bereich 20°C bis 150°C und bei einem Druck im Bereich 1 bis 80 bar durchgeführt wird.

Vorteilhaft ist das erfindungsgemäße Verfahren, wenn die in der Ultrafiltration verwendete Membran eine Trenngrenze kleiner 200 nm, bevorzugt kleiner 50 nm, besitzt.

Durch das erfmdungsgemäße Verfahren können aus ungereinigten Elastomeren gereinigte Elastomere mit einem um bis zu 99 Gew.-% reduzierten Fremdstoffanteil hergestellt werden. Unter ungereinigten Elastomeren sind dabei Elastomere zu verstehen, die einen Fremdstoffanteil größer 1 Gew.-%, bezogen auf das ungereinigte Elastomer, besitzen. Unter gereinigten Elastomeren sind alle Elastomere zu verstehen, deren Fremdstoffanteil um bis zu 99 Gew.-% mindestens aber 50 Gew.-% bezogen auf das ungereinigte Elastomer reduziert wurde. Bevorzugt sind gereinigte Elastomere mit einem Fremdstoffanteil im Bereich von 0,05 bis 1 Gew.-%, bezogen auf das Gesamtgewicht des gereinigten Elastomers.

Unter Fremdstoffen sind dabei alle dem Fachmann bekannten Monomere, Zusatzstoffe und/oder deren Umsetzungsprodukte zu verstehen, die bei der Herstellung eines Elastomeren nicht umgesetzt, hinzugesetzt werden und/oder entstehen können. Bevorzugt sind die Fremdstoffe ausgewählt aus der Gruppe bestehend aus Emulgatoren, organischen und/oder anorganischen Salzen oder Säuren wie Fettsäuren und Harze, Wasser, nicht umgesetzten Initiatorresten und/oder Zerfallsprodukten, Stabilisatoren, Molekulargewichtsreglern, Monomeren, Verarbeitungshilfsmitteln wie Flokulationsmitteln, oligomeren Bestandteilen mit einem Molekulargewicht kleiner 2000 g/mol und Übergangsmetallkatalysatoren für die Hydrierung, Metathese, Oxidationsund/oder Reduktionsmittel und/oder Bestandteile dieser Übergangsmetallkatalysatoren, Oxidations- und/oder Reduktionsmittel. Besonders bevorzugte Fremdstoffe sind Fettsäuren, Fettsäureester und Na, K, Ca Salze von Fettsäuren, oder Harzsäuren, Stabilisatoren, Flokulationsmittel, Wasser, Katalysatorbestandteile, Liganden.

Oft kann der Übergangsmetallkatalysator nicht in seiner ursprünglich in der Katalyse eingesetzten Struktur zurückgewonnen werden, sondern nur Bestandteile des ehemals eingesetzten Übergangsmetallkatalysators. Unter den Bestandteilen des ehemals eingesetzten Übergangsmetallkatalysators sind alle Liganden, Übergangsmetalle, Übergangsmetallverbindungen und Ligandenderivate zu verstehen, die sich während der homogenen Katalyse gebildet haben.

Für das erfindungsgemäße Verfahren muss eine organische Lösung des verunreinigten Elastomeren vorliegen. Als organische Lösemittel im erfindungsgemäßen Verfahren können alle organischen Lösemittel und/oder Lösemittelgemische verwendet werden, in denen das Polymere bei den Verfahrensbedingungen mit >90 Gew.-% homogen gelöst vorliegt. Bevorzugte Lösemittel sind alle aromatischen und/oder chlorierten Lösemittel sowie Ketone und zyklische Ether. Besonders bevorzugt sind Toluol, Benzol, Chlorbenzol, Chloroform, Methylenchlorid, Methylethylketon, Tetrahydrofuran oder Mischungen dieser Lösemittel.

Das gelöste, ungereinigte Elastomer wird anschließend einer Ultrafiltration unterzogen. Im erfindungsgemäßen Verfahren wird die Ultrafiltration zur Abtrennung von Fremdstoffen aus Lösungen in Gegenwart der gelösten Elastomere verwendet. Dazu wird das in Lösung befindliche Elastomer sowie die Fremdstoffe ein- oder mehrmals unter Druck über eine semipermeable Membran geleitet, die das Lösemittel oder das Lösemittelgemisch sowie die darin enthaltenden homogen gelösten Fremdstoffe (Permeat) hindurchlässt, das gelöste Elastomer (Retentat) jedoch zurückhält.

Auf diese Weise wird das Permeat vom Retentat getrennt aufgefangen.

Die Drücke die hierbei angelegt werden, liegen im Bereich von 1 bis 80 bar, bevorzugt 2 bis 50 bar. Das abgetrennte Filtrat (Permeat) enthält den oder die Fremdstoffe und kann durch frisches Lösemittel oder Lösemittelgemisch ersetzt werden, wenn eine Konzentrierung der zu extrahierenden Elastomerlösung (Retentat) vermieden werden soll. Vorteilhaft bei diesem Verfahren ist es, dass durch die Menge des ausgetauschten Lösemittels die Restkonzentration der Fremdstoffe in beliebiger Weise im gereinigten Elastomer eingestellt werden kann.

Als Membranen können alle semipermeablen und beständigen Membranen eingesetzt werden, die dem Fachmann für den Einsatz der Ultrafiltration bekannt sind. Bevorzugt sind Ultrafiltrationsmembranen, die eine hochporöse Außenschicht (Stützschicht) und weitere feiner poröse Innenschichten (Trennschicht) enthalten. Die hochporöse Außenschicht kann ein Gewebe oder Vlies oder ein keramischer Grundkörper sein. Unter hochporös ist ein durchschnittlicher Porendurchmesser der Außenschicht im Bereich von größer 500 nm zu verstehen Die Innenschichten sind auf den Außenschichten aufgebrachte symmetrische oder asymmetrischen Membranen aus geeigneten Polymeren oder eine weitere feiner poröse keramische Schicht. Die Innenschicht sind feiner porös als ihre jeweilige Außenschicht. Die Porendurchmesser der Innenschichten können auch noch von außen nach innen kontinuierlich kleiner werden. Die durchschnittliche Porengröße der Innenschichten oder wenigstens einer Innenschicht liegt im Bereich von 1 nm bis 200 nm, besonders bevorzugt im Bereich von 1 bis 50 nm. Die Ausschlussgrenze einer solchen eingesetzten Membran, die Außen- und Innenschichten enthält, liegt somit ebenfalls im Bereich von 1 bis 200 nm, besonders bevorzugt im Bereich von 1 bis 50 nm. Zusätzlich kann die Membran eine besonders dünne Trennschicht auf der Oberfläche aufweisen, die gegebenenfalls ionische Gruppen enthält.

Geeignete Membranpolymere sowohl für die Außen- als auch für die Innenschicht sind Polysulfone, Polyethersulfone, Polyamide, Polyetherketone, Polyharnstoffe, Polyurethane, Polyvinylidendifluorid, Celluloseacetate, Cellulosenitrate, Polycarbonate, Polyacrylnitril und Polyepoxide. "Als keramische Baustoffe werden typischerweise verwendet Membranen auf Basis von zum Teil gemischter Oxide, Carbonate, Carbide und Nitride der Elemente Aluminium, Antimon, Barium, Beryllium, Bismut, Bor, Hafnium, Kobalt, Mangan, Magnesium, Nickel, Silizium, Thorium, Titan, Wolfram und Zirkonium.

Das erfindungsgemäße Verfahren kann sowohl diskontinuierlich als auch kontinuierlich durchgeführt werden. Bevorzugt wird ein kontinuierliches Verfahren. Im kontinuierlichen Verfahren werden Membranmodule in Kaskadenart betrieben. Die Betriebstemperatur beträgt max. 150°C, vorzugsweise liegt sie im Bereich von 40 bis 130°C. Im erfindungsgemäßen Verfahren sollte die Strömungsgeschwindigkeit des Retentats an der Membran vorbei 1 m/sec nicht unterschreiten, da sonst bei hohen Polymerkonzentration größer 3 Gew.-% eine Konzentrationspolarisation eintritt und die Permeatflussrate sinkt. Bevorzugt sind Strömungsgeschwindigkeiten im Bereich von 2 bis 10 m/sec. Die Konzentration des Elastomeren in der durch Ultrafiltration zu behandelnden Lösung von Elastomer, Fremdstoffen und Lösemittel bzw. Lösemittelgemisch ist nach oben (steigende Konzentrationen) durch die steigende Viskosität begrenzt. Diese wiederum hängt vom Molekulargewicht und der Monomerzusammensetzung des Elastomeren ab. Um die Viskosität der Elastomerlösung zu reduzieren, ist ein Erwärmen der Polymerlösung vorteilhaft. Die Konzentrationsgrenze der zu trennenden Lösung liegt im Bereich von 2 bis 40 Gew.-%. Bevorzugt sind Konzentrationsgrenzen im Bereich von 5 bis 20 Gew.-%.

Als Membranmodule für das kontinuierliche Verfahren kommen alle handelsüblichen Typen in Betracht. Bevorzugt werden Plattenmodule, Wickelmodule, Rohrmodule, Kapillarmodule und Multikanalmodule welche gegebenenfalls durch integrierte Strömungsbrecher unterstützt werden können.

Durch das erfindungsgemäße Verfahren kann so schrittweise der oder die Fremdstoffe entfernt werden aber auch unterschiedliche Konzentrationen an Fremdstoffen in der Elastomerlösung eingestellt werden.

Die nach dem erfindungsgemäßen Verfahren gereinigte Elastomerlösung (Retentat) kann als solche direkt in den Handel kommen oder nach den dem Fachmann bekannten Aufarbeitungsverfahren wie Entgasung und Sprühtrocknung oder Koagulation in Wasser mit anschließender Trocknung als Pulver, Krümel oder in Ballenform mit einem Fremdstoffanteil, der bis zu 99 Gew.-% kleiner ist, als der Fremdstoffanteil gegenüber dem ungereinigten Elastomer, in den Handel kommen. Andere Trocknungsverfahren wie Eindampfen, Dünnschichtverdampfen oder Gefriertrocknen sind ebenfalls möglich.

In einer besonderen Ausführung des Verfahrens wird eine in Gegenwart eines Übergangsmetallkatalysators hydrierte Elastomerlösung durch die Ultrafiltration von dem Übergangsmetallkatalysator und/oder seinen Bestandteilen befreit. Die für die Hydrierung eingesetzten Übergangsmetallkatalysatoren enthalten oft teure Übergangsmetalle als auch teuere Liganden. Der Verbleib des Übergangsmetallkatalysators und/oder seiner Bestandteile im hydrierten Elastomer kann zusätzlich die Eigenschaften des fertigen Elastomers stark beeinträchtigen. Daher werden große Anstrengungen unternommen den Übergangsmetallkatalysator und/oder seine Bestandteile so weit wie möglich in einer aktiven und/oder inaktiven Form zurückzugewinnen.

Ein im Stand der Technik bekanntes Verfahren zur Abtrennung von homogenen metallenthaltenden Katalysatoren aus Verfahrenslösungen der homogenen Katalyse, ist die Verwendung von Adsorptionsmitteln wie Aktivkohle, Kieselsäuregel, Aluminiumoxid oder mit funktionellen Gruppen belegte Ionenaustauscherharzen. Eine Rückgewinnung der Metalle von diesen Adsorptionsmaterialien ist häufig mit aufwendigen Extraktionsverfahren oder sogar Veraschung der Adsorptionsmaterialien verbunden. Neben zum Teil erheblichen Verlusten an Metall durch mangelnde Selektivität und/oder Wirksamkeit/Kapazität der Adsorptionsmaterialien, werden dabei im Regelfall die zurückgewonnenen Metalle ihrer Liganden und somit auch ihrer katalytischen Aktivität meist vollständig beraubt. Ein Wiedereinsatz der Metalle in Form der Übergangsmetallkatalysatoren ist daher in solchen Fällen ohne kostenintensive Aufarbeitung nicht möglich. Zusätzlich entstehen bei der Wiedergewinnung der Metalle von Ionenaustauschern durch die Veraschung noch zusätzliche Kosten, da auch die Adsorptionsmaterialien der Ionenaustauscher einen erheblichen Kostenfaktor bilden (EP-A 1203777). Die teilweise in den Übergangsmetallkatalysatoren enthaltenden teueren Liganden können auf diese Weise überhaupt nicht zurückgewonnen werden.

Durch das erfindungsgemäße Verfahren kann so der Übergangsmetallkatalysator oder seine Bestandteile aus dem Permeat zurückgewonnen werden. Dafür kann das Permeat, das den Übergangsmetallkatalysator und/oder seine Bestandteile enthält, durch Destillation und/oder Trocknung vom Lösungsmittel befreit werden, so dass der Übergangsmetallkatalysator und/oder seine Bestandteile bis zu 99 Gew.-% zurückgewonnen werden können. Auch andere dem Fachmann bekannte Aufarbeitungsverfahren einer Elastomerlösung wie Fällung, Filtration und Kristallisation können eingesetzt werden um den Übergangsmetallkatalysator und/oder seine Bestandteile zurückzugewinnen.

In einer weiteren besondern Ausführung des erfindungsgemäßen Verfahrens kann bereits ein Elastomer, das in einem organischen Lösemittel gelöst wurde und durch das erfmdungsgemäße Verfahren bereits von Fremdstoffen ausgewählt aus der Gruppe bestehend aus Emulgatoren, organischen und/oder anorganischen Salzen oder Säuren wie Fettsäuren und Harze, Wasser, Stabilisatoren, nicht umgesetzten Initiatorresten und/oder Zerfallsprodukten, Molekulargewichtsreglem, Monomeren, Verarbeitungshilfsmitteln wie Flokulationsmitteln und oligomeren Bestandteilen mit einem Molekulargewicht kleiner 2000 g/mol befreit wurde in einem weiteren Schritt mit einem Übergangsmetallkatalysator hydriert werden. Auch diese hydrierte und mit Übergangsmetallkatalysator und/oder dessen Bestanteilen verunreinigte Elastomerlösung kann wiederum dem erfindungsgemäßen Verfahren unterzogen werden. Hierbei kann nicht nur gereinigtes, hydriertes Elastomer hergestellt werden sondern auch der kostenintensive Übergangsmetallkatalysator zurückgewonnen werden.

Als ungereinigte Elastomere in dem erfindungsgemäßen Verfahren sind für den Fachmann alle Elastomere zu verstehen, die durch Emulsionspolymerisation und gegebenenfalls anschließende Hydrierungen, Oxidationen, Reduktionen hergestellt werden können. Besonders bevorzugt sind ungereinigte Elastomere, die in organischen Lösemitteln und/oder Lösemittelgemischen zu größer 90 % in einer Konzentration von größer 2 Gew.-% löslich sind. Ganz besonders bevorzugt sind ungereinigte Elastomere, deren Glasübergangspunkt unter 0°C liegt. Insbesondere bevorzugt sind ungereinigte Elastomere ausgewählt aus der Gruppe bestehend aus Nitril-Butadien-Kautschuk und hydriertem Nitril-Butadien-Kautschuk. Unter Nitril-Butadien-Kautschuk ist sowohl das Copolymer aus Acrylnitril und Butadien (NBR) zu verstehen als auch Copolymere aus Acrylnitril, Butadien und weiteren ungesättigten Monomeren ausgewählt aus der Gruppe bestehend aus Vinylmonomeren, Acrylatestern, Methacrylatestern, Acrylsäure, Methacrylsäure, Ethylenglycoldiacrylat, Ethylenglycoldimethacrylat, Styrol Divinylbenzol sowie Dienmonomere wie Isopren, Chloropren. Besonders bevorzugte weitere, ungesättigte Monomere sind Vinylbenzole wie Styrol und Divinylbenzol, sowie Acrylate wie Methylacrylat, Ethylacrylat, Butylacrylat, 2-Ethylhexylacrylat und Methacrylate wie Methylmethacrylat, Ethylmethacrylat, Butylmethacrylat, 2-Ethylhexylmethacrylat, Methacrylonitril sowie freie Säuren wie Acrylsäure, Methacrylsäure, Fumarsäure, Itaconsäure aber auch Maleinsäureanhydrid. Nitril-Butadien-Kautschuke, die neben den Wiederholungseinheiten abgeleitet von Comonomeren mit Carboxylgruppen enthalten, werden als carboxylierte Nitril-Butadien-Kautschuke (XNBR) bezeichnet.

Als hydrierte Nitril-Butadien-Kautschuke sind alle Nitril-Butadien-Kautschuke zu verstehen, die einer Hydrierung unterzogen wurden. Der hydrierte Nitril-Budadien-Kautschuk, der neben Wiederholungseinheiten abgeleitet von Acrylnitril und Butadien keine weiteren Wiederholungseinheiten von anderen ungesättigten Monomeren enthält wird als HNBR bezeichnet, während alle hydrierten Nitril-Butadien-Kauschuke, die neben den Wiederholungseinheiten abgeleitet von Acrylnitril und Butadien auch noch Wiederholungseinheiten abgeleitet von Comonomeren mit Carboxylgruppen enthalten, werden als hydrierte, carboxylierte Nitril-Butadien-Kautschuke (HXNBR) bezeichnet.

Unter gereinigten Elastomeren sind die selben Gruppen von Elastomeren wie bei den ungereinigten Elastomeren zu verstehen, wobei die gereinigten Elastomere einen im Vergleich zu den ungereinigten Elastomeren einen um bis zu 99 Gew.-% reduzierten Fremdstoffanteil besitzen. Sowohl die ungereinigten Elastomere werden in gelöster Form in das erfindungsgemäße Verfahren eingesetzt als auch die gereinigten Elastomere in gelöster Form aus dem erfindungsgemäßen Verfahren gewonnen.

In einer besonderen Ausführungsform des erfindungsgemäßen Verfahrens wird ein ungereinigter Nitril-Butadien-Kautschuk verwendet, dessen Nitrilgruppengehalt im Bereich von 10 bis 60 Gew.-%, bevorzugt 15 bis 55 Gew.-% bezogen auf den Gesamtanteil des ungereinigten Nitril-Butadien-Kautschuks. In der besonderen Ausführungsform enthält der ungereinigte Nitril-Butadien-Kautschuk 70 bis 99,9 Gew.-%, bevorzugt 90 bis 99,5 Gew.-% an Wiederholungseinheiten abgeleitet von Acrylnitril, Butadien und/oder anderen mit diesen beiden Monomeren copolymerisierbaren ungesättigten Monomeren.

Für die Hydrierung der Elastomere werden aus einer Emulsionspolymerisation gewonnener Nitril-Butadien-Kautschuk in einen Festkautschuk überführt. Die Umwandlung des Nitril-Butadien-Kautschuklatex in einen Festkautschuk wird nach den dem Fachmann bekannten Verfahren durchgeführt. Anschließend wird der Festkautschuk entweder auf die dem Fachmann bekannte Art und Weise oder durch Lösen in einem organischen Lösemittel und anschließendem Ultrafiltrieren nach dem erfindungsgemäße Verfahren von einem Teil der Fremdstoffe befreit, wobei nur durch das erfindungsgemäße Verfahren eine Reduzierung des Fremdstoffanteil bis zu 99 Gew.-% des ehemals vorhandenen Fremdstoffanteils erreicht werden kann. Der von Fremdstoffen befreite Nitril-Butadien-Kautschuk wird anschließend entweder in einem organischen Lösemittel gelöst, wenn es durch die dem Fachmann bekannten Reinigungsverfahren wie Fällung oder Koagulation und anschließender Wäsche von den Fremdstoffen befreit wurde, oder es wird direkt die aus dem erfindungsgemäßen Verfahren erhaltene Retentat-Lösung, die den gelösten und gereinigten Nitril-Butadien-Kautschuk mit einem für die Hydrierung geeigneten Übergangsmetallkatalysator versetzt und hydriert.

Für die Hydrierung geeignete Übergangsmetallkatalysatoren sind alle dem Fachmann bekannten Übergangsmetallkatalysatoren, die in dem organischen Lösemittel löslich sind und für Hydrierungen verwendet werden können. Die mit dem Übergangsmetallkatalysator versetzte Nitril-Butadien-Kautschuk-Lösung wird anschließend nach den dem Fachmann bekannten Verfahren und Übergangsmetallkatalysatoren hydriert wie in WO-A 0177185, Ger. Offen (1987) Seite 5 von Fiedler, Budrig, Barden und Thoermer, DE-A 3514403 beschrieben. Anschließend wird die aus diesem Verfahren gewonnene hydrierte und von Übergangsmetallkatalysator und/oder dessen Bestandteilen verunreinigte Lösung dem erfindungsgemäßen Verfahren zur Reinigung und Rückgewinnung des Übergangsmetallkatalysators zugeführt.

Durch das erfindungsgemäße Verfahren können bis zu 99 Gew.-% von Fremdstoffen befreite oder auf bestimmte Fremdstoffanteile eingestellte Elastomere hergestellt werden. Die durch das erfindungsgemäße Verfahren erhaltenen Elastomere zeichnen sich durch etliche Vorteile aus. Sie zeigen geringere Formverschmutzung bei Spritzgußanwendungen, die gereinigten Elastomeren sind im Lebensmittelkontakt und im medizinischen Bereich anwendbar aufgrund des geringen Vorkommens von Verunreinigungen. Die gereinigten Elastomere sind im Elektronikbereich für Isolierungen anwendbar, da nur reduzierte Mengen ionischer Fremdstoffe, die den Strom leiten können und bei eventuell auftretenden Verbrennungen keine umweltschädlichen Stoffe zurückbleiben werden. Aufgrund dieser Eigenschaften bedingt durch den geringen Fremdstoffanteils eignen sich diese Elastomere für den Einsatz im kosmetischen und medizinischen Bereich, Nahrungsmittelkontakt- sowie Elektroniksektor und in der Gummiindustrie. Zusätzliche Vorteile ergeben sich bei der Kosteneinsparung bei anschließenden Veredlungsprozessen wie z.B. Hydrierung und Metathesen durch Katalysatoreinsparung und niedrigeren Instandhaltungskosten aufgrund niedrigerer Korrosionspotentiale. Darüber hinaus ist das Verfahren einfach, und es kann vollkontinuierlich ohne weiteres auch im großtechnischen Maßstab durchgeführt werden.

Das erfindungsgemäße Verfahren erlaubt es auf eine einfache und wirtschaftliche Weise teure Übergangsmetallkatalysatoren in aktiver und/oder inaktiver Form und/oder deren Bestandteile aus Elastomerlösungen, neben allen anderen niedermolekularen Bestandteilen der Lösung, zurückzugewinnen. Bei Einsatz des beschriebenen Verfahrens kann weitgehend auf kostenaufwendige Adsorptionsverfahren verzichtet werden oder aber die Kapazität vorhandener Adsorptionsanlagen erheblich verkleinert und somit die Standzeiten der Adsorptionsanlagen deutlich erhöht werden. Darüber kann das erfmdungsgemäße Verfahren auch vollkontinuierlich im großtechnischen Maßstab durchgeführt werden.

Die Abtrennung der Übergangsmetallkatalysatoren oder anderer Fremdstoffe aus elastomeren Lösungen mit Hilfe der Ultrafiltration war aufgrund der hohen Viskosität der elastomeren Lösungen nicht zu erwarten. Eine Blockierung der Poren durch Deckschichtbildung oder Fouling (Ablagerungen an der Porenoberfläche) mit laufender Filtrationszeit oder eine adsorptive Rückhaltung der Übergangsmetallkatalysatoren und/oder deren Bestandteile oder anderer Fremdstoffe an der polaren Membranoberfläche, wie der Fachmann es erwartet hätte und im Journal of Membrane Science (2003), 214(2), Seite 211-221 von Reddy, Mohan, Bhattacharya Shah und Ghosh oder im Journal of Membrane Science (1999), 160(1), Seite 65-75 von Lindau und Jonsson und in CHEMTECH (1996), 26(6), Seite 46-53 von Singh Rajindar und im Journal of Membrane Science (1995), 98(3), Seite 249-262 von Nystroem, Kaipia und Luque beschrieben, wird bei dem erfindungsgemäßen Verfahren nicht beobachtet. An der Oberfläche der Poren bildet sich im Gleichgewicht zur Strömungsgeschwindigkeit und Viskosität eine lösungsmittelverarmte Deckschicht, die die Filtrationsgeschwindigkeit stark kontrolliert aber dadurch auch den Einsatz höher poröser Membranen ermöglicht und gleichzeitig den Verschleiß der Membranen verhindert oder mindert ohne die Effizienz des erfindungsgemäßen Verfahrens erheblich zu verringern.

### Beispiele

### Beispiel 1

Die Reinigung der beispielhaften NBR-Polymerlösungen (basierend auf einer 10 Gew.-% Lösung von Perbunan® VPKA 8840 (Emulsionspolymerisationsprodukt aus Acrylnitril und Butadien mit einem Acrylnitrilgehalt von 34 Gew.-% und einer Mooney Viskosität von 34 ML 1+4 bei 100°C) in Chlorbenzol mit Fremdstoffanteil bezogen auf das Perbunan 1 Gew.-%) erfolgt batchweise durch Ultrafiltration. Das Retentat wird im Kreislauf unter Druck durch ein Membranmodul gepumpt. Die gewünschte Permeatmenge wird abgetrennt und durch eine gleich große Menge des entsprechenden Lösungsmittels (Chlorbenzol), das dem Retentat kontinuierlich zugeführt wird, ersetzt. Dadurch wird erreicht, dass sich die Konzentration der eingesetzten Polymerlösung während des Reinigungsprozesses nicht ändert. Die Abreicherung einer niedermolekularen Verunreinigung wird unter diesen Bedingungen durch ihre Rückhaltung und den Lösungsmittelaustauschkoeffizienten (Mengenverhältnis Permeat zu Retentat) bestimmt.

Reinigung einer 10 gew.-%igen NBR-Lösung (perbunan® VPKA 8840, (Emulsionspolymerisationsprodukt aus Acrylnitril und Butadien mit einem Acrylnitrilgehalt von 34 Gew.-% und einer Mooney Viskosität von 34 ML 1+4 bei 100°C)), hergestellt durch Emulsionspolymerisation, eingesetzt als Kautschukballen, gelöst in Chlorbenzol.

### Versuchsbedingungen:

Modul: 2 Module mit je 3 Membranen parallel angeordnet im Modul
Membran: 6 Multikanalelemente mit 0,066m² Membranfläche Gesamtfläche 0,396m² Trenngrenze = 10 nm
Temperatur: 110°C
Feeddruck vor Membran: 9 bar
Differenzdruck: 3 bar
Flussgeschwindigkeit: 4,5 m/s
Permeatfluss: 31 kg/m²h
Fahrweise: Diafiltration mit Chlorbenzol.
Ergebnis:

| | Probe 1 | Probe 3 | Probe 7 | Probe 12 | Probe 17 | Probe 22 | Probe 26 |
|---|---|---|---|---|---|---|---|
| Diafiltrationskoeffizient | 0* | 0,12 | 0,73 | 1,52 | 2,29 | 2,76 | 3,12 |
| Summe Fettsäuren [Gew.-%] | 0,11 | 0,10 | 0,06 | 0,04 | 0,03 | 0,02 | <0,01 |

| | | | | | | | |
|---|---|---|---|---|---|---|---|
| * Start Probe | | | | | | | |

### Beispiel 2

Die Reinigung der beispielhaften hydrierten Nitril-Butadien-Kautschuk-Elastomerlösungen (basierend auf einer 10 Gew.-% Lösung von Therban® C 3467 (hydriertes Emulsionspolymerisationsprodukt aus Acrylnitril und Butadien mit einem Acrylnitrilgehalt von 34 und einer Mooney Viskosität von 68 ML 1+4 bei 100°C) in Chlorbenzol) erfolgt batchweise durch Ultrafiltration. Das Retentat wird im Kreislauf unter Druck durch ein Membranmodul gepumpt. Die gewünschte Permeatmenge wird abgetrennt und durch eine gleich große Menge des entsprechenden Lösungsmittels (Chlorbenzol), das dem Retentat kontinuierlich zugeführt wird, ersetzt. Dadurch wird erreicht, dass sich die Konzentration der eingesetzten Elastomerlösung während des Reinigungsprozesses nicht ändert. Die Abreicherung des Katalysators RhCl[P(C₆H₅)₃]₃ welcher technisch zur Hydrierung von Nitril-Butadien-Kautschuk eingesetzt wird, wird unter diesen Bedingungen durch die Rückhaltung und den Lösungsmittelaustauschkoeffizienten (Mengenverhältnis Permeat zu Retentat) bestimmt.

Extraktion des Katalysators aus einem 7,5 %igen hydrierten Nitril-Butadien-Kautschuk (basierend auf Therban® C 3467 (hydriertes Emulsionspolymerisationsprodukt aus Acrylnitril und Butadien mit einem Acrylnitrilgehalt von 34 und einer Mooney Viskosität von 68 ML 1+4 bei 100°C) in Chlorbenzol.

### Versuchsbedingungen:

Modul: 2 Module mit je 3 Membranen parallel angeordnet im Modul
Membran: 6 Multikanalelemente mit 0,066 m² Membranfläche Gesamtfläche 0,396 m² Trenngrenze = 10 nm
Temperatur: 110°C
Feeddruck vor Membran: 5 bar
Differenzdruck: 2,2 bar
Flussgeschwindigkeit: 4,5 m/s
Permeatfluss: 30 kg/m² h
Fahrweise: Diafiltration mit Chlorbenzol.
Ergebnis:

| | HNBR Lösung vor Ultrafiltration | HNBR Lösung nach Ultrafiltration |
|---|---|---|
| Diafiltrationskoeffizient | 0* | 2,7 |
| Phosphor Konzentration [mg/kg] | 1300 | 120 |
| Summe Fettsäuren [Gew.-%] | 0,12 | <0,01 |

## Patentansprüche

1. Verfahren zur Herstellung von gereinigten Elastomeren, die durch Emulsionspolymerisation hergestellt werden und deren Anteil an Fremdstoffen um bis zu 99 Gew.-% reduziert ist, bezogen auf das ungereinigte Elastomer, umfassend die Schritte
a) Ultrafiltrieren eines in einem organischen Lösemittel gelösten, ungereinigten durch Emulsionspolymerisation hergestellten Elastomers und getrenntes Auffangen des Permeats, das die Fremdstoffe enthält, vom Retentat, dass das gereinigte Elastomer enthält und
b) Einstellung der Strömungsgeschwindigkeit des Retentats auf einen Wert größer 1 m/sec. während der Ultrafiltration.

2. Verfahren nach Anspruch 1, wobei das ungereinigte Elastomer Nitril-Butadien-Kautschuk ist, das durch Emulsionspolymerisation hergestellt wird, in einen Festkautschuk überführt wird und anschließend in einem organischen Lösemittel gelöst wird.

3. Verfahren nach Anspruch 1, mit ungereinigtem, hydriertem Nitril-Butadien-Kautschuk als Elastomer, welches durch Hydrierung von Nitril-Butadien-Kautschuk, das einen Fremdstoffanteil im Bereich von 1 bis 10 Gew.-% besitzt, in Gegenwart eines Übergangsmetallkatalysator hergestellt wird, wobei der Übergangsmetallkatalysator aus dem Permeat der Ultrafiltration zurückgewonnen wird und nach Aufarbeitung in der Hydrierung wieder eingesetzt wird.

4. Verfahren nach Anspruch 1, bei dem ein nach Anspruch 2 hergestellter, gereinigter Nitril-Butadien-Kautschuk in Gegenwart eines Übergangsmetallkatalysators zum ungereinigten, hydrierten Nitril-Butadien-Kautschuk hydriert wird,
a) die erhaltene ungereinigte, hydrierte Lösung ultrafiltriert wird, das Permeat, das den Übergangsmetallkatalysator enthält, vom Retentat, das den gereinigten, hydrierten Nitril-Butadien-Kautschuk enthält, getrennt aufgefangen wird und
b) Einstellung der Strömungsgeschwindigkeit des Retentats auf einen Wert größer 1 m/sec. während der Ultrafiltration, wobei der Übergangsmetallkatalysator aus dem Permeat der Ultrafiltration zurückgewonnen wird und nach Aufarbeitung in die Hydrierung wieder eingesetzt wird.

5. Verfahren nach einem der Ansprüche 1 bis 4, wobei die Ultrafiltration kontinuierlich betrieben wird.

6. Verfahren nach einem der Ansprüche 1 bis 5, wobei die Ultrafiltration bei Temperaturen im Bereich 20°C bis 150°C und bei einem Druck im Bereich 1 bis 80 bar durchgeführt wird.

7. Verfahren nach einem der Ansprüche 1 bis 6, wobei die in der Ultrafiltration verwendete Membran eine Ausschlußgrenze kleiner 200 nm besitzt.

## Claims

1. Method for the preparation of purified elastomers which are prepared by emulsion polymerization and whose level of impurity has been reduced by up to 99 wt.%, based on the unpurified elastomer, comprising the steps of
a) ultrafiltering an unpurified elastomer prepared by emulsion polymerization and dissolved in an organic solvent and separately collecting the permeate containing the impurities, from the retentate containing the purified elastomer, and
b) adjusting the flow rate of the retentate to a value of more than 1 m/sec during the ultrafiltration.

2. Method according to Claim 1, wherein the unpurified elastomer is nitrile-butadiene rubber which is prepared by emulsion polymerization, converted into a solid rubber and subsequently dissolved in an organic solvent.

3. Method according to Claim 1, with unpurified, hydrogenated nitrile-butadiene rubber as elastomer prepared by hydrogenation in the presence of a transition metal catalyst of nitrile-butadiene rubber having an impurity level in the range of from 1 to 10 wt.%, wherein the transition metal catalyst is recovered from the permeate of the ultrafiltration and reused in the hydrogenation after processing.

4. Method according to Claim 1, wherein a purified nitrile-butadiene rubber prepared according to Claim 2 is hydrogenated in the presence of a transition metal catalyst to form the unpurified, hydrogenated nitrile-butadiene rubber,
a) the unpurified, hydrogenated solution obtained is ultrafiltered, the permeate containing the transition metal catalyst is collected separately from the retentate containing the purified, hydrogenated nitrile-butadiene rubber, and
b) adjusting the flow rate of the retentate to a value of more than 1 m/sec during the ultrafiltration, wherein the transition metal catalyst is recovered from the permeate of the ultrafiltration and reused in the hydrogenation after processing.

5. Method according to any one of Claims 1 to 4, wherein the ultrafiltration is carried out as a continuous operation.

6. Method according to any one of Claims 1 to 5, wherein the ultrafiltration is carried out at temperatures in the range 20°C to 150°C and at a pressure in the range 1 to 80 bar.

7. Method according to any one of Claims 1 to 6, wherein the membrane used in the ultrafiltration has an exclusion limit of less than 200 nm.

## Revendications

1. Procédé pour la préparation d'élastomères purifiés, qui sont préparés par polymérisation en émulsion et dont la proportion en substances étrangères est réduite à raison de jusqu'à 99% en poids, par rapport à l'élastomère non purifié, comprenant les étapes
a) d'ultrafiltration d'un élastomère dissous dans un solvant organique, non purifié, préparé par polymérisation en émulsion et récupération séparée du perméat qui contient les substances étrangères, du rétentat, qui contient l'élastomère purifié et
b) de réglage de la vitesse d'écoulement du rétentat à une valeur supérieure à 1 m/sec. pendant l'ultrafiltration.

2. Procédé selon la revendication 1, dans lequel l'élastomère non purifié est un caoutchouc de nitrile-butadiène, qui est préparé par une polymérisation en émulsion, est transformé en un caoutchouc solide et ensuite dissous dans un solvant organique.

3. Procédé selon la revendication 1 avec un caoutchouc de nitrile-butadiène non purifié, hydrogéné, comme élastomère, qui est préparé par hydrogénation de caoutchouc de nitrile-butadiène qui présente une proportion de substances étrangères dans la plage de 1 à 10% en poids, en présence d'un catalyseur à base d'un métal de transition, le catalyseur à base de métal de transition étant récupéré à partir du perméat de l'ultrafiltration et à nouveau utilisé après traitement dans l'hydrogénation.

4. Procédé selon la revendication 1, dans lequel un caoutchouc de nitrile-butadiène purifié préparé selon la revendication 2 est hydrogéné en présence d'un catalyseur à base d'un métal de transition en caoutchouc de nitrile-butadiène hydrogéné non purifié,
a) la solution hydrogénée non purifiée obtenue est ultrafiltrée, le perméat, qui contient le catalyseur à base d'un métal de transition est récupéré séparément du rétentat qui contient le caoutchouc de nitrile-butadiène purifié, hydrogéné et
b) la vitesse d'écoulement du rétentat est réglée à une valeur supérieure à 1 m/sec. pendant l'ultrafiltration, le catalyseur à base d'un métal de transition étant récupéré du perméat de l'ultrafiltration et à nouveau utilisé après traitement dans l'hydrogénation.

5. Procédé selon l'une quelconque des revendications 1 à 4, l'ultrafiltration étant réalisée en continu.

6. Procédé selon l'une quelconque des revendications 1 à 5, l'ultrafiltration étant réalisée à des températures dans la plage de 20°C à 150°C et à une pression dans la plage de 1 à 80 bars.

7. Procédé selon l'une quelconque des revendications 1 à 6, la membrane utilisée dans l'ultrafiltration présentant une limite d'exclusion inférieure à 200 nm.
